# EUROPEAN PATENT SPECIFICATION

(11) **EP 1 983 245 B1**
(45) Date of publication and mention of the grant of the patent: **09.03.2011**
(21) Application number: 08153457.0
(22) Date of filing: 27.03.2008
(51) Int. Cl.: F16L 33/207, F16L 13/14

(54) **Method for providing a press-fitting connector, particularly for multilayer pipes**
Verfahren zum Bereitstellen eines Pressfittings, insbesondere für mehrschichtige Rohre
Procédé de fourniture d'un raccord à sertissage, particulièrement pour tuyaux multicouches

(30) Priority: 19.04.2007 IT MI20070811
(43) Date of publication of application: 22.10.2008
(73) Proprietor: COES S.p.A., 20123 Milano (IT)
(72) Inventor: Bizzarrini, Giuseppe, 20123 Milano (IT)
(74) Representative: Modiano, Micaela Nadia

(56) References cited:
- EP-A- 1 561 986
- DE-C1- 19 838 125
- DE-U1- 20 221 504
- DE-U1- 29 721 286
- DE-U1-202005 009 453
- DE-U1-202007 001 436
- US-A- 6 095 571

## Description

The present invention relates to a method for providing a press-fitting connector, particularly for multilayer pipes, as defined in the preamble of claim 1, see DE 20 2007 001 436 U1.

Press-fitting connectors, also known as "pressfittings", for plastic pipes or so-called "multilayer" pipes, composed generally of two layers of synthetic material between which a layer of metallic material is interposed, are known.

Generally, these types of connectors are composed of a sleeve made of metallic material, which has an end portion onto which the axial end of a pipe to be connected to the connector is designed to be fitted. The sleeve supports a bush made of metallic material, which lies coaxially around at least one portion of this end portion of the sleeve. The end portion of the sleeve supports one or more gaskets, arranged in corresponding slots which are formed circumferentially on the outer lateral surface of the end portion of the sleeve and can engage the internal surface of the pipe fitted on the end portion of the sleeve. The bush can be deformed plastically by pressing toward the axis of the sleeve so as to fix the pipe stably to the sleeve.

In many types of connectors, the gasket, which provides the liquid- or gas-tight seal between the pipe and the connector, is constituted by an O-Ring.

Among these types of connectors, in some cases the O-Ring, if not affected by forces, protrudes from the outer lateral surface of the end portion of the sleeve onto which the pipe is to be fitted, while in other cases it is contained within the volume of the end portion of the sleeve.

Moreover, in some known types of press-fitting connectors, pressing of the bush is performed at the gasket or gaskets, while in other types of connectors pressing is performed only proximate to the gasket or between two contiguous gaskets.

In connectors in which the pressing of the bush is not performed at the gasket, said gasket protrudes necessarily from the outer lateral surface of the end portion of the sleeve onto which the pipe is fitted in order to achieve the required liquid- or gas-tight seal.

The protrusion of the gasket or gaskets from the outer lateral surface of the end portion of the sleeve onto which the pipe is fitted causes drawbacks.

One of these drawbacks is constituted by the fact that the gasket can be damaged irreparably during the fitting of the pipe onto the end portion of the sleeve.

In order to reduce this danger, very often a flaring of the end of the pipe to be fitted onto the sleeve is provided. The operation for flaring the pipe, being an additional operation, increases installation costs.

Another drawback is constituted by the fact that the gasket or gaskets obtain a sealing effect with the pipe even before the bush is deformed plastically, preventing the revealing, during testing, of any incorrect or omitted pressing of the bush which may cause leaks at a later time, which are particularly severe when the connector and the pipe, after testing, have already been walled in.

In the use of press-fitting connectors of the known type, moreover, a certain difficulty is observed in fitting the pipe onto the end portion of the sleeve if the pipe, although provided with a flared end, is deformed or ovalized. The flaring of the end of the pipe reduces this problem, but it does not solve it entirely, forcing interventions on the pipe to restore its correct shape.

Another problem is constituted by the fact that in order to achieve adequate mechanical strength and satisfactory liquid- or gas-tightness in the connection of the connector to the pipe, pressing of the bush must be performed in precise regions which allow very narrow positional tolerances, increasing the complexity of this operation.

DE 20 2007 001 436 U1 discloses gasket sealing of a pipe end onto a fitting element, in which the gasket is provided so as to avoid its damaging sealing operations.

The aim of the present invention is to solve the problems and obviate the drawbacks mentioned above by providing a method for providing a press-fitting connector which is considerably easier and more practical to use than known types of press-fitting connectors.

Within this aim, an object of the invention is to provide a method for providing a press-fitting connector which can be used without problems even with pipes which do not have a guiding flared portion.

Another object of the invention is to provide a method for providing a press-fitting connector which can be used without problems even with deformed or ovalized pipes.

Another object of the invention is to provide a method for providing a press-fitting connector which makes the operation for pressing the bush to fix the connector to the pipe particularly easy, by allowing broad tolerances in the positioning of the pressing tool with respect to the bush and low deformation loads of the bush.

Still another object of the invention is to provide a method for providing a press-fitting connector which reveals, during testing, any errors or omissions in the pressing of the bush.

This aim and these and other objects, which will become better apparent hereinafter, are achieved by a method for providing a press-fitting connector, particularly for multilayer pipes, according to the invention, that has the features set forth in claim 1.

Further characteristics and advantages of the invention will become better apparent from the description of a preferred but not exclusive embodiment of the connector according to the invention, illustrated by way of non-limiting example in the accompanying drawings, wherein:

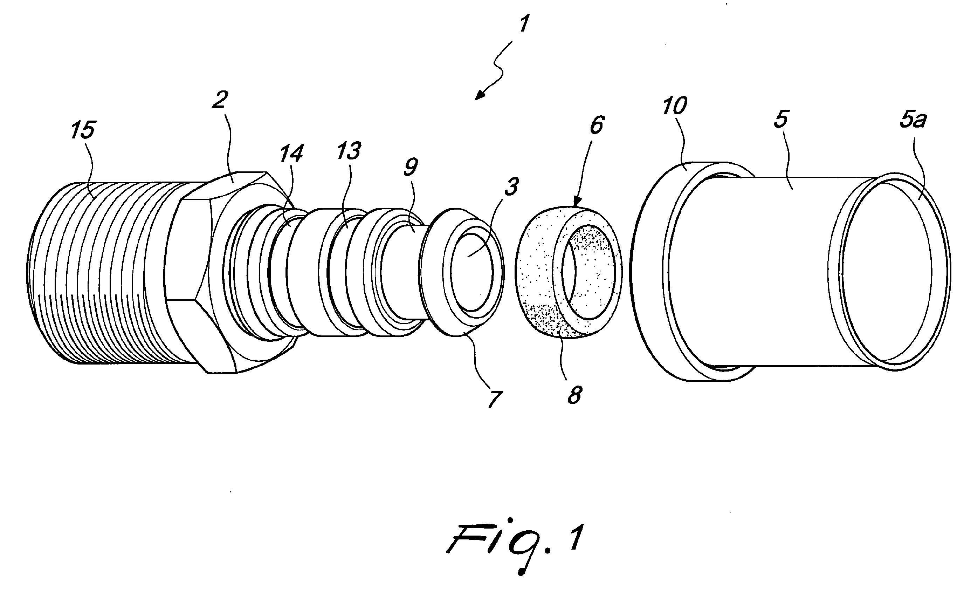

Figure 1 is an exploded perspective view of the connector according to the invention;

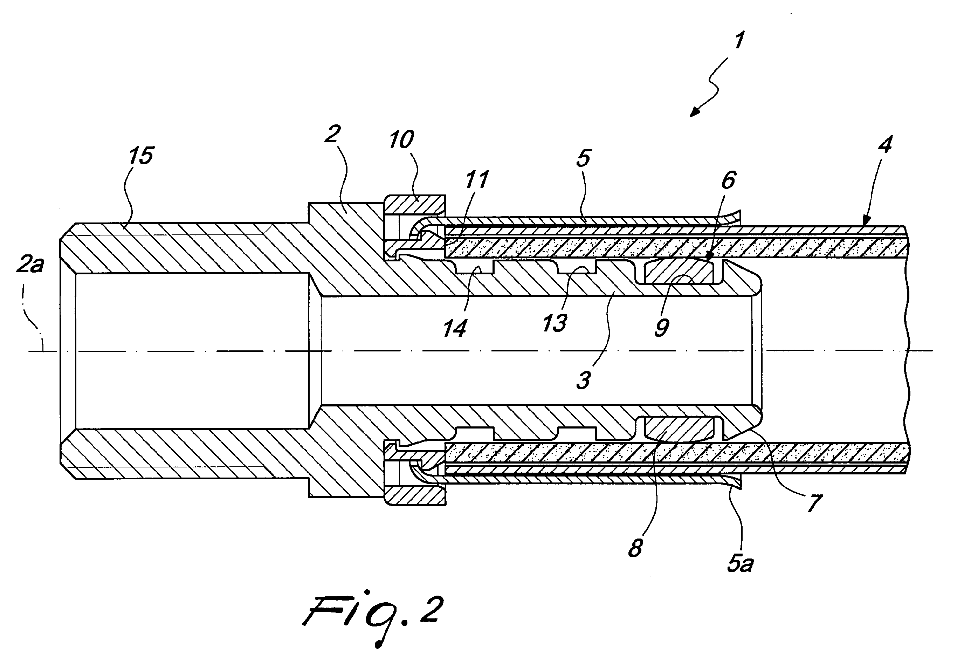

Figure 2 is an axial sectional view of the connector, with the pipe fitted thereon, before the plastic deformation of the bush;
Figure 3 is an axial sectional view, similar to Figure 1, of the connector, with the pipe fitted thereon, after the plastic deformation of the bush.

With reference to the figures, the connector according to the invention, generally designated by the reference numeral 1, comprises a sleeve 2, which is preferably made of metallic material and has at least one end portion 3 onto which it is possible to fit the axial end of a pipe 4 to be connected to the connector.

The sleeve 2 supports a bush 5 which lies coaxially around at least one portion of the end portion 3 of the sleeve 2 and the end portion 3 of the sleeve 2 supports sealing means 6 which can engage the inner surface of the pipe 4 fitted thereon.

The bush 5 can be deformed plastically by pressing toward the axis 2a of the sleeve 2 in order to fix the pipe 4 stably to the sleeve 2.

According to the invention, the end portion 3 of the sleeve 2 has a guiding taper 7 at its axial end which can be inserted in the pipe 4, and the sealing means 6 comprise at least one ring-like gasket 8, which is accommodated in a first groove 9 which is formed circumferentially on the lateral surface of the end portion 3 of the sleeve 2. The gasket 8, if no forces are applied thereto, has an outside diameter which is at the most equal to the outside diameter of the end portion 3 of the sleeve 2 in the regions that are adjacent to the first groove 9, so as to not protrude from the outer lateral surface of the end portion 3, and the bush 5 is designed to be deformed plastically by pressing toward the axis 2a of the sleeve 2 at least at the gasket 8.

The connector also comprises a ring 10, which is connected in a per se known manner, preferably by means of a snap coupling, to the sleeve 2 and supports the bush 5 at an axial end thereof and more particularly at the axial end of the bush 5 which is directed in the opposite direction with respect to the axial end of the sleeve 2 onto which the pipe 4 is to be fitted.

The bush 5 almost reaches the axial end of the end portion 3 with the taper 7 and conveniently has, at its axial end which lies proximate to the taper 7, a flared portion 5a.

The ring 10 defines, between the bush 5 and the end portion 3 of the sleeve 2, an axial shoulder 11 for the end of the pipe 4 which is fitted onto the end portion 3 of the sleeve 2.

Preferably, the first groove 9 is formed on the outer lateral surface of the end portion 3 of the sleeve 2 proximate to the taper 7.

The taper 7 has a preferably conical shape, with an apex angle of the cone which ranges substantially from 40° to 90°.

The gasket 8 is inserted with axial play within the first slot 9 and the outer lateral surface of the gasket 8 is preferably cambered.

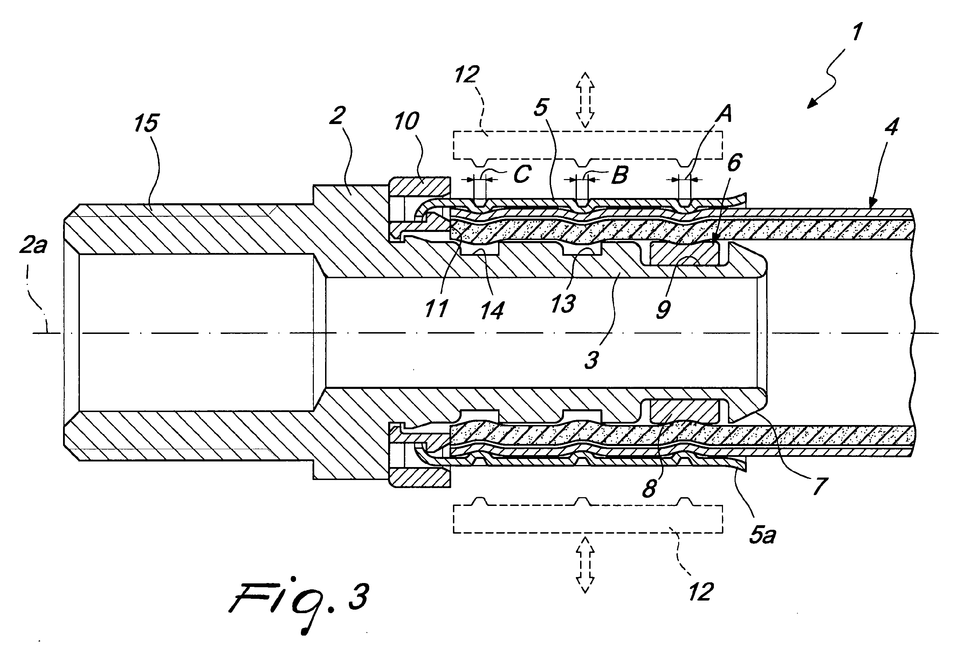

As shown in particular in Figure 3, in which a dashed line shows a pressing tool, designated by the reference numeral 12, the region A of the bush 5 which is subjected to pressing at the gasket 8 is preferably narrower, parallel to the axis 2a of the sleeve 2, than the width of the gasket 8.

More particularly, the region A of the bush 5 has a width which preferably substantially ranges from 1/15 to 1/5 of the width of the first groove 9 and even more preferably is substantially equal to 1/10 of the width of the first slot 9.

The end portion 3 of the sleeve 2 has, on its outer lateral surface, at least one second groove 13, which is arranged circumferentially and the bush 5 is designed to be deformed plastically by pressing toward the axis 2a of the sleeve 2 also at this second groove 13.

Preferably, the end portion 3 of the sleeve 2 has, on its outer lateral surface, a second groove 13 and a third groove 14 which are arranged circumferentially and are mutually spaced, parallel to the axis 2a of the sleeve 2, and the bush 5 is designed to be deformed plastically by pressing toward the axis 2a of the sleeve 2 also in regions B, C located respectively at the second groove 13 and at the third groove 14.

The regions B, C of the bush 5 subjected to pressing at the second groove 13 and at the third groove 14 also are narrower, parallel to the axis 2a of the sleeve 2, than the width of the corresponding groove 13, 14, which ranges preferably substantially from 1/15 to 1/5 of the width of the corresponding groove 13, 14 and, even more preferably, substantially equal to 1/10 of the width of the corresponding groove 13, 14.

The sleeve 2 has, starting from its axial end which lies opposite the axial end provided with the taper 7, a threaded portion 15 which can be used to couple the sleeve 2 to a component, such as for example a valve or a manifold, of a line for conveying liquids or gases.

As an alternative, the sleeve 2 can also be provided with two coaxial end portions which are mutually opposite and are provided substantially like the end portion 3, with a corresponding ring and a bush, as described above, to provide the coaxial connection between two pipes 4.

Also as an alternative, the sleeve 2 can also be provided monolithically with the component to which the pipe 4 is to be connected.

Use of the connector according to the invention is as follows.

The pipe 4 is fitted with an end portion thereof onto the end portion 3 of the sleeve 2, inserting it between the end portion 3 and the bush 5.

It should be noted that the presence of the taper 7 makes this operation particularly easy and allows to fit easily pipes 4 onto the end portion 3 even without the need to flare beforehand the end of the pipe 4 and even if such end of the pipe 4 is not perfectly circular or ovalized.

Moreover, it should be noted that the arrangement of the gasket 8 proximate to the end portion 3 of the sleeve 2 with the taper 7 allows, before fitting the pipe 4 onto the end portion 3, to check for the presence and correct positioning of the gasket 8.

The pipe 4 is pushed along the end portion 3 of the sleeve 2 until it rests with its axial end against the shoulder 11.

Subsequently, the bush 5, by means of the pressing tool 12, which can be constituted by a clamp-like tool actuated mechanically or manually, is deformed plastically toward the axis 2a of the sleeve 2 at the regions A, B, C. As a consequence of this pressing, the bush 5 and the pipe 4 are deformed plastically toward the axis 2a of the sleeve 2, obtaining, on the part of the pipe 4, engagement with compression of the gasket 8 and at least partial penetration within the grooves 13 and 14.

The engagement of the pipe 4 with the gasket 8 ensures hermetic liquid- or gas-tightness in the joint between the connector 1 and the pipe 4, while the partial penetration of the pipe 4 within the grooves 13 and 14 ensures the required mechanical strength in the joint between the connector 1 and the pipe 4.

It should be noted that the limited width of the regions A, B, C of the bush 5 which are deformed plastically toward the axis 2a of the sleeve 2 at the gasket 8 and at the grooves 13, 14, which are considerably wider, allows to obtain a correct plastic deformation of the bush 5 even with rather limited forces, which can be reached, particularly in connectors for small-diameter pipes, also by means of a manual actuation of the pressing tool 12 or in any case with compact equipment.

The reduced extension of the regions A, B, C of the bush 5 which are deformed plastically with respect to the width of the grooves 9, 13, 14 further allows to have a high tolerance in the positioning of the pressing tool 12 with respect to the bush and the sleeve 2, which facilitates the pressing operation significantly.

It should be noted that due to the fact that the gasket 8, in the absence of forces, does not protrude from the outer lateral surface of the end portion 3 of the sleeve 2 inserted in the pipe 4, a liquid- or gas-tight effect is not achieved if the bush 5 is not pressed.

Due to this fact, failure to press the bush 5, caused by errors or forgetfulness, is indicated immediately by leaks during the testing of the system.

Again due to the fact that the gasket 8 does not protrude from the outer lateral surface of the end portion 3 of the sleeve 2, damage of the gasket 8 is avoided effectively even if pipes 4 with a non-flared end are used.

In practice it has been found that the method according to the invention fully achieves the intended aim, since it simplifies considerably the operations for fitting the pipe onto the connector without requiring preliminary operations for flaring the end of the pipe and even with ovalized pipes, and further facilitates the subsequent pressing operation for fixing the pipe to the connector.

Another advantage of the method according to the invention is that it allows inspection of the gasket before fitting the pipe onto the connector.

Although the method according to the invention has been conceived to be used particularly with multilayer pipes composed of at least two layers of synthetic material with at least one metallic layer interposed, it can be used also with pipes entirely made of synthetic material.

The connector thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing a press-fitting connector, particularly for multilayer pipes,
wherein the connector comprises a sleeve (2) which has at least one end portion (3) onto which the axial end of a pipe (4) to be connected to the connector (1) can be fitted, said sleeve (2) supporting a bush (5) which lies coaxially around at least one portion of said end portion (3) of the sleeve (2), said end portion (3) of the sleeve (2) supporting sealing means (6) which can engage the inner surface of the pipe (4) fitted thereon and said bush (5) being plastically deformable by pressing toward the axis (2a) of the sleeve (2) in order to fix the pipe (4) stably to said sleeve (2), said end portion (3) of the sleeve (2) having a guiding taper (7) at its axial end which can be inserted in the pipe (4), said sealing means (6) comprising at least one ring-like gasket (8) which is accommodated in a first groove (9) which is formed circumferentially on the outer lateral surface of said end portion (3) of the sleeve (2), and said gasket (8), in the absence of forces, having an outside diameter which is at the most equal to the outside diameter of said end portion (3) of the sleeve (2) in the regions that are adjacent to said first groove (9) and said bush (5) being plastically deformable at least at a region (A) thereof by pressing toward the axis (2a) of the sleeve (2) at least at said gasket (8),
the method comprising fitting the pipe (4) with an end portion thereof onto the end portion (3) of the sleeve (2) by inserting the pipe (4) between the end portion (3) of the sleeve (2) and the bush (5), **characterized in that** it further comprises plastically deforming the bush (5) at least at said region (A) towards the axis (2a) of the sleeve (2) with a pressing tool (12) such that the width extension of said region (A) of the bush (5) which is subjected to pressing and is deformed plastically by pressing at said gasket (8) is narrower on a direction parallel to the axis (2a) of said sleeve (2), than the width extension of said gasket (8) along the direction parallel to said axis (2a).

2. The method for providing the press-fitting connector according to claim 1, **characterized in that** said first groove (9) is formed proximate to the axial end of said end portion (3) of the sleeve (2) with said taper (7).

3. The method for providing the press-fitting connector according to claim 1, **characterized in that** said taper (7) is provided conical, with an apex angle of the cone substantially ranging from 40° to 90°.

4. The method for providing the press-fitting connector according to one or more of the preceding claims, **characterized in that** the outer lateral surface of said gasket is cambered.

5. The method for providing the press-fitting connector according to one or more of the preceding claims, **characterized in that** the region (A) of said bush (5) subjected to pressing at said gasket (8) has a width, parallel to the axis of the sleeve, substantially ranging from 1/15 to 1/5 of the width of said first groove (9).

6. The method for providing the press-fitting connector according to one of the claims 1-4, **characterized in that** the region (A) of said bush (5) subjected to pressing at said gasket (8) has a width, parallel to the axis (2a) of the sleeve (2), which is substantially equal to 1/10 of the width of said first groove (9).

7. The method for providing the press-fitting connector according to one or more of the preceding claims, **characterized in that** said end portion (3) of the sleeve (2) is provided delimited, on the opposite side with respect to said taper (7), by a shoulder (11) for the axial end of the pipe (4) which is fitted onto said end portion (3) of the sleeve (2).

8. The method for providing the press-fitting connector according to claim 7, **characterized in that** said shoulder (11) is formed by a ring (10) which is connected coaxially to said sleeve (2) and supports said bush (5).

9. The method for providing the press-fitting connector according to claim 8, **characterized in that** said ring (10) is coupled by snap action to said sleeve (2).

10. The method for providing the press-fitting connector according to one or more of the preceding claims, **characterized in that** said end portion (3) of the sleeve (2) is provided , on its outer lateral surface, with at least one second groove (13) which is arranged circumferentially, said bush (5) being designed to be deformed plastically by pressing toward the axis (2a) of the sleeve (2) also at said at least one second groove (13).

11. The method for providing the press-fitting connector according to claim 10, **characterized in that** the region (B) of said bush (5) which is subjected to pressing at said at least one second groove (13) is narrower, parallel to the axis (2a) of the sleeve (2), than the width of said at least one second groove (13).

12. The method for providing the press-fitting connector according to claims 10 or 11, **characterized in that** the region (B) of said bush (5) subjected to pressing at said at least one second groove (13) has a width, parallel to the axis (2a) of the sleeve (2), ranging substantially from 1/15 to 1/5 of the width of said at least one second groove (13).

13. The method for providing the press-fitting connector according to claims 10 or 11, **characterized in that** the region (B) of said bush (5) which is subjected to pressing at said at least one second groove (13) has a width, parallel to the axis (2a) of the sleeve (2), substantially equal to 1/10 of the width of said at least one second groove (13).

14. The method for providing the press-fitting connector according to one or more of the preceding claims, **characterized in that** said end portion (3) of the sleeve (2) is provided, on its outer lateral surface, with a second groove (13) and a third groove (14) which are arranged circumferentially and are mutually spaced parallel to the axis (2a) of the sleeve (2), said bush (5) being designed to be deformed plastically by pressing toward the axis (2a) of the sleeve (2) also at said second groove (13) and at said third groove (14).

15. The method for providing the press-fitting connector according to one or more of the claims 8 and 9, **characterized in that** the axial end of said bush (5) which lies opposite said ring (10) is flared.

16. The method for providing the press-fitting connector according to one or more of the preceding claims, **characterized in that** it comprises checking if said gasket (8), before fitting the pipe (4) onto said end portion (3) of the sleeve (2), is visible from the axial end of the sleeve (2) with said taper (7).

17. The method for providing the press-fitting connector according to one or more of the preceding claims, **characterized in that** said sleeve (2) is provided, starting from its axial end which lies opposite the axial end with said taper (7), with a threaded portion (15) for the coupling of the sleeve (2) to a component of a line for conveying liquids or gases.

## Patentansprüche

1. Verfahren zum Bereitstellen eines Pressfitting-Verhinders, insbesondere für mehrschichtige Rohre,
wobei der Verbinder eine Muffe (2) aufweist, welche mindestens einen Endabschnitt (3) hat, auf welchen das axiale Ende eines mit dem Verbinder (1) zu verbindenden Rohres (4) aufgesetzt werden kann, wobei die Muffe (2) eine Buchse (5) abstützt, welche koaxial um mindestens einen Abschnitt des Endabschnitts (3) der Muffe (2) liegt, wobei der Endabschnitt (3) der Muffe (2) Dichtmittel (6) trägt, welche an die Innenfläche des darauf aufgesetzten Rohrs (4) angreifen können, und die Buchse (5) durch Pressen in Richtung auf die Achse (2a) der Muffe (2) plastisch verformbar ist, um das Rohr (4) stabil auf der Muffe (2) zu fixieren, wobei der Endabschnitt (3) der Muffe (2) an seinem axialen Ende, welches in das Rohr (4) eingesteckt werden kann, eine Führungsabschrägung (7) hat, wobei die Dichtmittel (6) mindestens eine ringförmige Dichtung (8) aufweisen, welche in einer ersten Nut (9) untergebracht ist, welche am Umfang der äußeren Seitenfläche des Endabschnitts (3) der Muffe (2) ausgebildet ist, und die Dichtung (B) in Anwesenheit von Kräften einen Außendurchmesser hat, welcher höchstens gleich dem Außendurchmesser des Endabschnitts (3) der Muffe (2) in den Bereichen ist, die der ersten Nut (9) benachbart sind, und die Buchse (5) mindestens in einem Bereich (A) durch Pressen in Richtung auf die Achse (2a) der Muffe (2) mindestens an der Dichtung (8) plastisch verformbar ist,
wobei das Verfahren das Aufsetzen eines Endabschnitts des Rohrs (4) auf den Endabschnitt (3) der Muffe (2) durch Einstecken des Rohrs (4) zwischen den Endabschnitt (3) der Muffe (2) und die Buchse (5) umfasst, **dadurch gekennzeichnet, dass** es ferner das plastische Verformen der Buchse (5) in mindestens dem Bereich (A) in Richtung auf die Achse (2a) der Muffe (2) mit einem Presswerkzeug (12) derart umfasst, dass die Breitenausdehnung des Bereichs (A) der Buchse (5), welcher dem Pressen ausgesetzt ist und durch das Pressen am Dichtring (8) plastisch verformt wird, in einer Richtung parallel zu der Achse (2a) der Muffe (2) schmaler als die Breitenausdehnung des Dichtrings (8) entlang der Richtung parallel zu der Achse (2a) ist.

2. Verfahren zum Bereitstellen des Pressfitting-Verbinders nach Anspruch 1, **dadurch gekennzeichnet, dass** die erste Nut (9) nahe dem axialen Ende des Endabschnitts (3) der Muffe (2) mit der Abschrägung (7) ausgebildet ist.

3. Verfahren zum Bereitstellen des Pressfitting-Verbinders nach Anspruch 1, **dadurch gekennzeichnet, dass** die Abschrägung (7) konisch beschaffen ist, wobei ein Spitzenwinkel des Kegels im Wesentlichen im Bereich von 40° bis 90° liegt.

4. Verfahren zum Bereitstellen des Pressfitting-Verbinders nach einem oder mehreren der vorhergehenden Ansprüche, **dadurch gekennzeichnet, dass** die äußere Seitenfläche der Dichtung gewölbt ist.

5. Verfahren zum Bereitstellen des Pressfitting-Verbinders nach einem oder mehreren der vorhergehenden Ansprüche, **dadurch gekennzeichnet, dass** der Bereich (A) der Buchse (5), der dem Pressen an der Dichtung (8) ausgesetzt ist, parallel zu der Achse der Muffe eine Breite hat, die im Wesentlichen 1/15 bis 1/5 der Breite der ersten Nut (9) beträgt.

6. Verfahren zum Bereitstellen des Pressfitting-Verbinders nach einem der Ansprüche 1-4, **dadurch gekennzeichnet, dass** der Bereich (A) der Buchse (5), der dem Pressen an der Dichtung (8) ausgesetzt ist, parallel zu der Achse (2a) der Muffe (2) eine Breite hat, die im Wesentlichen 1/10 der Breite der ersten Nut (9) beträgt.

7. Verfahren zum Bereitstellen des Pressfitting-Verbinders nach einem oder mehreren der vorhergehenden Ansprüche, **dadurch gekennzeichnet, dass** der Endabschnitt (3) der Muffe (2) auf der gegenüberliegenden Seite in Bezug auf die Abschrägung (7) durch eine Schulter (11) für das axiale Ende des Rohrs (4) begrenzt vorgesehen ist, welche auf den Endabschnitt (3) der Muffe (2) aufgesetzt wird.

8. Verfahren zum Bereitstellen des Pressfitting-Verbinders nach Anspruch 7, **dadurch gekennzeichnet, dass** die Schulter (11) durch einen Ring (10) gebildet ist, welcher koaxial mit der Muffe (2) angeschlossen ist und die Buchse (5) trägt.

9. Verfahren zum Bereitstellen des Pressfitting-Verbinders nach Anspruch 8, **dadurch gekennzeichnet, dass** der Ring (10) durch einrastende Wirkung mit der Muffe (2) gekoppelt wird.

10. Verfahren zum Bereitstellen des Pressfitting-Verbinders nach einem oder mehreren der vorhergehenden Ansprüche, **dadurch gekennzeichnet, dass** der Endabschnitt (3) der Muffe (2) an seiner äußeren Seitenfläche mit mindestens einer zweiten Nut (13) versehen ist, welche umfänglich angeordnet ist, wobei die Buchse (5) derart gestaltet ist, dass sie auch an der mindestens einen zweiten Nut (13) durch Pressen in Richtung auf die Achse (2a) der Muffe (2) plastisch verformt wird.

11. Verfahren zum Bereitstellen des Pressfitting-Verbinders nach Anspruch 10, **dadurch gekennzeichnet, dass** der Bereich (B) der Buchse (5), welcher an der mindestens einen zweiten Nut (13) dem Pressen ausgesetzt ist, parallel zu der Achse (2a) der Muffe (2) schmaler als die Breite der mindestens einen zweiten Nut (13) ist.

12. Verfahren zum Bereitstellen des Pressfitting-Verbinders nach Anspruch 10 oder 11, **dadurch gekennzeichnet, dass** der Bereich (B) der Buchse (5), der dem Pressen an der mindestens einen zweiten Nut (13) ausgesetzt ist, parallel zu der Achse (2a) der Muffe (2) eine Breite hat, die im Wesentlichen 1/15 bis 1/5 der Breite der mindestens einen zweiten Nut (13) beträgt.

13. Verfahren zum Bereitstellen des Pressfitting-Verbinders nach Anspruch 10 oder 11, **dadurch gekennzeichnet**, das der Bereich (B) der Buchse (5), welcher dem Pressen an der mindestens einen zweiten Nut (13) ausgesetzt ist, parallel zu der Achse (2a) der Muffe (2) eine Breite hat, die im Wesentlichen 1/10 der Breite der mindestens einen zweiten Nut (13) beträgt.

14. Verfahren zum Bereitstellen des Pressfitting-Verbinders nach einem oder mehreren der vorhergehenden Ansprüche, darduch **gekennzeichnet**, dass der Endabschnitt (3) der Muffe (2) an seiner äußeren Seitenfläche mit einer zweiten Nut (13) und einer dritten Nut (14) versehen ist, welche umfänglich angeordnet sind und parallel zu der Achse (2a) der Muffe (2) voneinander beabstandet sind, wobei die Buchse (5) derart gestaltet ist, dass sie auch an der zweiten Nut (13) und an der dritten Nut (14) durch Pressen in Richtung auf die Achse (2a) der Muffe (2) plastisch verformt wird.

15. Verfahren zum Bereitstellen des Pressfitting-Verbinders nach einem oder beiden der Ansprüche 8 und 9, **dadurch gekennzeichnet, dass** das axiale Ende der Buchse (5), welches dem Ring (10) gegenüberliegt, aufgeweitet ist.

16. Verfahren zum Bereitstellen des Pressfitting-Verbinders nach einem oder mehreren der vorhergehenden Ansprüche, **dadurch gekennzeichnet, dass** es eine Prüfung umfasst, ob die Dichtung (8) vor dem Aufsetzen des Rohrs (4) auf den Endabschnitt (3) der Muffe (2) von dem axialen Ende der Muffe (2) mit der Abschrägung (7) sichtbar ist.

17. Verfahren zum Bereitstellen des Pressfitting-Verbinders nach einem oder mehreren der vorhergehenden Ansprüche, **dadurch gekennzeichnet, dass** die Muffe (2) beginnend an ihrem axialen Ende, welches entgegengesetzt dem axialen Ende mit der Abschrägung (7) liegt, mit einem Gewindeabschnitt (15) zum Anschließen der Muffe (2) an ein Bauteil einer Leitung zum Zuführen von Flüssigkeiten oder Gasen versehen ist.

## Revendications

1. Procédé pour fournir un raccord à sertissage, en particulier pour les tuyaux multicouches, dans lequel le raccord comprend un manchon (2) qui a au moins une partie d'extrémité (3) sur laquelle l'extrémité axiale d'un tuyau (4) destiné à être raccordé au raccord (1) peut être montée, ledit manchon (2) supportant une bague (5) qui est coaxiale autour d'au moins une partie de ladite partie d'extrémité (3) du manchon (2), ladite partie d'extrémité (3) du manchon (2) supportant des moyens d'étanchéité (6) qui peuvent mettre en prise la surface interne du tuyau (4) monté sur ces derniers et ladite bague (5) étant plastiquement déformable en appuyant vers l'axe (2a) du manchon (2) afin de fixer le tuyau (4) de manière stable sur ledit manchon (2), ladite partie d'extrémité (3) du manchon (2) ayant une conicité de guidage (7) au niveau de son extrémité axiale qui peut être insérée dans le tuyau (4), lesdits moyens d'étanchéité (6) comprenant au moins un joint de forme annulaire (8) qui est logé dans une première rainure (9) qui est formée de manière circonférentielle sur la surface latérale externe de ladite partie d'extrémité (3) du manchon (2), et ledit joint (8), en l'absence de forces, ayant un diamètre externe qui est au maximum égal au diamètre externe de ladite partie d'extrémité (3) du manchon (2) dans les régions qui sont adjacentes à ladite première rainure (9) et ladite bague (5) étant plastiquement déformable au moins niveau de sa région (A) en appuyant vers l'axe (2a) du manchon (2) au moins au niveau dudit joint (8),
le procédé comprenant les étapes consistant à raccorder le tuyau (4) avec sa partie d'extrémité sur la partie d'extrémité (3) du manchon (2) en insérant le tuyau (4) entre la partie d'extrémité (3) du manchon (2) et la bague (5), **caractérisé en ce qu'**il comprend en outre l'étape consistant à déformer plastiquement la bague (5) au moins au niveau de ladite région (A) vers l'axe (2a) du manchon (2) avec un outil de pression (12) de sorte que l'extension de largeur de ladite région (A) de la bague (5) qui est soumise à la pression et est déformée plastiquement en appuyant au niveau dudit joint (8) est plus étroite sur une direction parallèle à l'axe (2a) dudit manchon (2), que l'extension de largeur dudit joint (8) le long de la direction parallèle audit axe (2a).

2. Procédé pour fournir un raccord à sertissage selon la revendication 1, **caractérisé en ce que** ladite première rainure (9) est formée à proximité de l'extrémité axiale de ladite partie d'extrémité (3) du manchon (2) avec ladite conicité (7).

3. Procédé pour fournir un raccord à sertissage selon la revendication 1, **caractérisé en ce que** ladite conicité (7) est conique avec un angle de sommet du cône sensiblement de l'ordre de 40° à 90°.

4. Procédé pour fournir un raccord à sertissage selon une ou plusieurs des revendications précédentes, **caractérisé en ce que** la surface latérale externe dudit joint est cambrée.

5. Procédé pour fournir un raccord à sertissage selon une ou plusieurs des revendications précédentes, **caractérisé en ce que** la région (A) de ladite bague (5) soumise à la pression au niveau dudit joint (8) a une largeur parallèle à l'axe du manchon, sensiblement de l'ordre de 1/15 à 1/5 de la largeur de ladite première rainure (9).

6. Procédé pour fournir un raccord à sertissage selon l'une quelconque des revendications 1 à 4, **caractérisé en ce que** la région (A) de ladite bague (5) soumise à la pression au niveau dudit joint (8) a une largeur, parallèle à l'axe (2a) du manchon (2), qui est sensiblement égale à 1/10 de la largeur de ladite première rainure (9).

7. Procédé pour fournir un raccord à sertissage selon une ou plusieurs des revendications précédentes, **caractérisé en ce que** ladite partie d'extrémité (3) du manchon (2) est prévue en étant délimitée, sur le côté opposé par rapport à ladite conicité (7), par un épaulement (11) pour l'extrémité axiale du tuyau (4) qui est monté sur ladite partie d'extrémité (3) du manchon (2).

8. Procédé pour fournir un raccord à sertissage selon la revendication 7, **caractérisé en ce que** ledit épaulement (11) est formé par un anneau (10) qui est raccordé de manière coaxiale audit manchon (2) et supporte ladite bague (5).

9. Procédé pour fournir un raccord à sertissage selon la revendication 8, **caractérisé en ce que** ledit anneau (10) est couplé par une action d'emboîtement sur ledit manchon (2).

10. Procédé pour fournir un raccord à sertissage selon un ou plusieurs des revendications précédentes, **caractérisé en ce que** ladite partie d'extrémité (3) du manchon (2) est prévue, sur sa surface latérale externe, avec au moins une deuxième rainure (13) qui est agencée de manière circonférentielle, ladite bague (5) étant conçue pour être déformée plastiquement en appuyant vers l'axe (2a) du manchon (2) également au niveau de ladite au moins une deuxième rainure (13).

11. Procédé pour fournir un raccord à sertissage selon la revendication 10, **caractérisé en ce que** la région (B) de ladite bague (5) qui est soumise à la pression au niveau de ladite au moins une deuxième rainure (13) est plus étroite, parallèle à l'axe (2a) du manchon (2), que la largeur de ladite au moins une deuxième rainure (13).

12. Procédé pour fournir un raccord à sertissage selon les revendications 10 ou 11, **caractérisé en ce que** la région (B) de ladite bague (5) soumise à la pression au niveau de ladite au moins une deuxième rainure (13) a une largeur, parallèle à l'axe (2a) du manchon (2), sensiblement de l'ordre de 1/15 à 1/5 de la largeur de ladite au moins une deuxième rainure (13).

13. Procédé pour fournir un raccord à sertissage selon les revendications 10 ou 11, **caractérisé en ce que** la région (B) de ladite bague (5) qui est soumise à la pression au niveau de ladite au moins une deuxième rainure (13) a une largeur, parallèle à l'axe (2a) du manchon (2), sensiblement égale à 1/10 de la largeur de ladite au moins une deuxième rainure (13).

14. Procédé pour fournir un raccord à sertissage selon une ou plusieurs des revendications précédentes, **caractérisé en ce que** ladite partie d'extrémité (3) du manchon (2) est prévue, sur sa surface latérale externe, avec une deuxième rainure (13) et une troisième rainure (14) qui sont agencées de manière circonférentielle et sont mutuellement espacées, parallèlement à l'axe (2a) du manchon (2), ladite bague (5) étant conçue pour être plastiquement déformée en appuyant vers l'axe (2a) du manchon (2) également au niveau de ladite deuxième rainure (13) et au niveau de ladite troisième rainure (14).

15. Procédé pour fournir un raccord à sertissage selon une ou plusieurs des revendications 8 et 9, **caractérisé en ce que** l'extrémité axiale de ladite bague (5) qui est opposée audit anneau (10) est évasée.

16. Procédé pour fournir un raccord à sertissage selon une ou plusieurs des revendications précédentes, **caractérisé en ce qu'**il comprend l'étape consistant à vérifier si ledit joint (8), avant de monter le tuyau (4) sur ladite partie d'extrémité (3) du manchon (2), est visible à partir de l'extrémité axiale du manchon (2) avec ladite conicité (7).

17. Procédé pour fournir un raccord à sertissage selon une ou plusieurs des revendications précédentes, **caractérisé en ce que** ledit manchon (2) est prévu, à partir de son extrémité axiale qui est opposée à l'extrémité axiale de ladite conicité (7), avec une partie filetée (15) pour le couplage du manchon (2) sur un composant d'une conduite pour transporter des liquides ou des gaz.
